Europäisches Patentamt

European Patent Office

Office européen des brevets

(19)

(11) **EP 0 638 049 B2**

(12) **NEUE EUROPÄISCHE PATENTSCHRIFT**

(45) Veröffentlichungstag und Bekanntmachung des Hinweises auf die Entscheidung über den Einspruch:
**26.10.2005 Patentblatt 2005/43**

(45) Hinweis auf die Patenterteilung:
**09.09.1998 Patentblatt 1998/37**

(21) Anmeldenummer: **94905643.6**

(22) Anmeldetag: **14.02.1994**

(51) Int Cl.[7]: **C02F 5/14**, C02F 5/12, C02F 5/10, E21B 37/06

(86) Internationale Anmeldenummer:
**PCT/CH1994/000029**

(87) Internationale Veröffentlichungsnummer:
**WO 1994/019288 (01.09.1994 Gazette 1994/20)**

(54) **VERFAHREN ZUR VERHINDERUNG VON ABLAGERUNGEN IN EINEM BAUWERKSENTWÄSSERUNGSSYSTEM**

PROCESS FOR PREVENTING DEPOSITS IN A STRUCTURE'S DRAINAGE SYSTEM

PROCEDE DESTINEE A EMPECHER LA FORMATION DE DEPOTS DANS UN SYSTEME DE DRAINAGE DE CONSTRUCTIONS

(84) Benannte Vertragsstaaten:
**AT BE DE DK ES FR GB IT NL SE**

(30) Priorität: **17.02.1993 CH 48493**
**17.02.1993 CH 48593**
**05.01.1994 CH 1094**

(43) Veröffentlichungstag der Anmeldung:
**15.02.1995 Patentblatt 1995/07**

(73) Patentinhaber: **Wegmüller, Marcel Christian**
**4125 Riehen (CH)**

(72) Erfinder: **WEGMÜLLER, Marcel, Christian**
**CH-4059 Basel (CH)**

(74) Vertreter: **Hartmann, Günter et al**
**Ruschke Hartmann Becker**
**Pienzenauerstrasse 2**
**81679 München (DE)**

(56) Entgegenhaltungen:
**DD-A- 143 371          FR-A- 2 537 163**
**US-A- 3 917 530**

- **Produktionsformation Ferrofos 514 der Henkel KGaA**
- **Technische Informationen K 5-24 der Henkel KGaA: - Kuhlwasserkonditionierung mit P3-Ferrofos 8441" (undatiert)**
- **Unbedenklichkeitsbescheini~ung des Hygiene-Instituts des Ruhrgebifür des Produkt P3-Ferrofos 8461 vom 11.10.1990**
- **Produktinformation P3-Ferrofos 8461 der Henkel KGaA, Aufgabe vom 21.06.1985**

- **"Seminar für Betriebsführung im Ubertagebereich", Seminarbericht Ube r die Veranstaltung Nr. 46 am 2. März 1977**
- **"Seminar für BetriebsfUhrung im Ubertagebereich", Seminarbericht Ober die Veranstaltung Nr. 46 am 2. März 1977 z 1977: Beitrag Dr. We hle**
- **"Seminar für Betriebsfuhrung im Ubertagebereich", Seminarbericht über die Veranstaltung Nr. 46 am 2. M~rz 1977: Beitrag Schmidt**
- **Unbedenklichkeitsbescheinigung des Hygiene-Instituts des Ruhrgebie ts für das Produkt Ferrofos 514 ?iom 03.06.1975**
- **Henkel-Rechnung an die Firma Berbau AG Westfalen vom 27.02.1989**
- **"Härtestabilisierung von Bergwasser zur Verhinderung von Kalkab lagerungen in Tunnelentw sserungen" - Amt für Umweltschutz Grau bünden - 8. September 1993.**
- **"Härtestabilisierung von Bergwasser zur Verhinderung von Kalkablag erungen in Tunnelentwässerungen" - Amt für Umweltschutz Graubünde n - 11. Januar 1994**
- **"Härtestabilisierung von BergwasserlBericht NALCO" - Amt für Umwe ltschutz Graubünden - 29. März 1995.**
- **Zulässige Produkte Hartestabilisierung" - Amt für Umweltschutz Graubünden -?TPr(~sidential Green Chemistry Challenge" - 1996 Sma II Business Award-**
- **Ein neues, biologisch abbaubares Dispergiermittel - PASP Na-Salz-Bayer Ausgabe 03.99**

- "P3-ferrofos 514" Gebrauchsanleitung - Henkel Metallchemie-Stand vom 14.09.95, gedruckt aqm 30.10.96
- Wasserhaltungsprobleme in der Grube Nagyegyhaza, Ungarn, von R.Jaki, BHM, 133 Jahrgang (1988), Heft 6, Seiten 274-281
- Tabellarische Aufstellung der Unterschiede zwischen Bauwerken und Bergwerken (Grube)
- Handbuch des Tunnel- und Stollenbaus" von Prof. Maidl, Glückauf-Verlag, Essen, 1Auflage 1980, S.231-233 u. 259-262
- Interne Normen der Studienges. für unterirdische Verkehrsanlagen STUVA
- Hydrotechnik im bergbau und Bauwesen von einemAutorenkollektiv, von Prof.K.Strzodka, S.56-57, 152-153, 172-173, 178-179, Bergakademie Freiberg(1980)
- Schweizer Ing. u. Architekt", S.244-253, 24.03.200
- Forschung Strassenbau u. Strassenverkehrstechnik, S.13, 44-46 (1999)
- The Nalco Water Handbook, Nalco Chemical Company, Frank N.Kemmern; S.29.1-29.4 (1979)
- K.Strzodka Hydrotechnik im Bergbau u. Bauwesen, VEB Deutscher Verlag für Grundstoffindustrie, Leipzig, 1981, Seiten 54 bis 59, 170 bis 173
- Schreiben der F. Sika Services AG, datiert vom 31.03.2005
- Technische Informationen K 5-24 der Henkel KGaA: - Kuhlwasserkonditionierung mit P3-Ferrofos 8441" (undatiert)
- Produktinformation P3-Ferrofos 8461 der Henkel KGaA, Aufgabe vom 21.06.1985

- "Seminar für Betriebsführung im Ubertagebereich", Seminarbericht Ube r die Veranstaltung Nr. 46 am 2. März 1977
- "Seminar für BetriebsfUhrung im Ubertagebereich", Seminarbericht Ober die Veranstaltung Nr. 46 am 2. März 1977 z 1977: Beitrag Dr. We hle
- "Seminar für Betriebsfuhrung im Ubertagebereich", Seminarbericht über die Veranstaltung Nr. 46 am 2. M~rz 1977: Beitrag Schmidt
- Unbedenklichkeitsbescheinigung des Hygiene-Instituts des Ruhrgebie ts für das Produkt Ferrofos 514 ?iom 03.06.1975
- "Härtestabilisierung von Bergwasser zur Verhinderung von Kalkab lagerungen in Tunnelentw sserungen" - Amt für Umweltschutz Grau bünden - 8. September 1993.
- "Härtestabilisierung von Bergwasser zur Verhinderung von Kalkablag erungen in Tunnelentwässerungen" - Amt für Umweltschutz Graubünde n - 11. Januar 1994
- "Härtestabilisierung von BergwasserIBericht NALCO" - Amt für Umwe ltschutz Graubünden - 29. März 1995.
- Zulässige Produkte Hartestabilisierung" - Amt für Umweltschutz Graubünden -?TPr(~sidential Green Chemistry Challenge" - 1996 Sma ll Business Award-

Bemerkungen:

Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Verhinderung von Ablagerungen in einem Bauwerksentwässerungssystem. Unter Bauwerken des Hoch- und Tiefbaus versteht man Infrastrukturanlagen wie z.B. Gebäude, Tunnelbauten, Staumauern, Talsperren, Wasserkraftbauten, Erddämme, Stützmauern, Strassenbauten, Hangentwässerungsanlagen, Quellfassungen oder provisorische Baugruben.

Bei der Entwässerung von Bauwerken des Hoch- und Tiefbaus fallen Grund- und Sickerwässer an, die einen unterschiedlich hohen Gehalt an gelösten Wasserinhaltsstoffen aufweisen. Diese vorwiegend anorganischen Wasserinhaltsstoffe verursachen oft harte Ablagerungen. Beim Eintritt der Grund- und Sickerwässer in die Entwässerungssysterne verändern sich die physikalischen Bedingungen, und die ursprünglich gelösten Wasserinhaltsstoffe bilden harte, festhaftende Ablagerungen, welche in amorpher oder kristalliner Form vorliegen können. Diese Ablagerungen (Versinterungen) bestehen üblicherweise aus Calciumcarbonat, Magnesiumcarbonat, Calciumsulfat (Gips), Silikaten ($SiO_2$), Bariumsulfat und Eisenoxyden, alle gegebenenfalls in ihrer hydratisierten Form.

Diese harten, festhaftenden Ablagerungen verkleinern den Abflussquerschnitt oder schliessen ihn in Extremfällen ganz. In der Folge können die anfallenden Wassermengen nicht mehr frei abfliessen, und es bilden sich Rückstaus, die grosse Schäden verursachen können. Speziell bei jenen Bauwerken, deren Stabilität von der einwandfreien Funktionstüchtigkeit des Entwässerungssystems abhängig sind, können Ablagerungen fatale Folgen haben.

Die zur Zeit gebräuchlichsten Verfahren zum Entfernen dieser Ablagerungen sind: die elektromechanische Reinigung mit Spezialwerkzeugen sowie Hochdruckspülen oder Hochdruckfräsen mit Wasser. Diese Verfahren sind kostspielig, arbeitsintensiv und führen oft zu unerwünschten Betriebsunterbrüchen.

Seit langer Zeit sucht man deshalb nach einem Verfahren, das die Bildung dieser Ablagerungen reduziert oder verhindert. Die Vereinigung Schweizer Strassenfachleute (VSS) hat zur Entwicklung möglicher Verfahren einen Forschungsauftrag (VSS-Forschungsauftrag 16/90; Versinterung von Bauwerksentwässerungen) erteilt. In ihrem Zwischenbericht vom Oktober 1990 kommt die beauftragte Kommission zum Schluss, dass insbesondere die verwendeten Werkstoffe sowie deren Oberflächenbeschaffenheit die Wachstumsrate der Ablagerungen an den wasserführenden Teilen stark beeinflussen. Die Kommission schreibt in ihrem Bericht, dass einzig konstruktive Massnahmen geeignet sind, die Bildung von harten Ablagerungen zu hemmen. Dazu empfiehlt sie, den Wasserabfluss möglichst ruhig zu halten und die wasserführenden Teile mit einer glatten Oberfläche zu versehen, um die Haftung der Ablagerungen zu verkleinern.

Die vorliegende Erfindung betrifft nun ein Verfahren zur Verhinderung von Ablagerungen in Entwässerungssystemen von Tunnelbauten, Staumauern Talsperren oder Wasserkraftbauten, das dadurch gekennzeichnet ist, daß man dem Entwässerungssystem ein oder mehrere Konditionierungsmittel aus der Gruppe N-haltige Phosphonate, insbesondere Aminoalkylenphosphorsäuren, Phosphonocarbonsäuren, Bernsteinsäureamid, Polysaccharide, Polyoxycarbonsäuren und deren Copolymere, Proteine, insbesondere Polyasparaginsäure, Polyacrylate, Polymethacrylate, Polyacrylamide, Copolymere von Acrylsäure bzw. Methacrylsäure und Acrylamid, sulfomethylierte oder sulfoethylierte Polyacrylamide und Copolymere bzw. Terpolymere mit Acrylsäure und Maleinsäureester, Maleinsäureanhydrid-Polymere und -Copolymere und Ethercarboxylate mittels einer Dosieranlage (16) über eine Einspeisleitung (15) an der höchsten Stelle der Sickerleitung (13) in wäßriger Lösung in einer Menge von 0,1 bis 100 g/m$^3$ Sicker-oder Grund-wasser in Abhängigkeit von der anfallenden Wassermenge am Ende des Entwässerrungssystems zugibt. Durch die Zugabe eines Konditionierungsmittels zum zu behandelnden Wasser kann das Aufwachsen der Kristallkeime verhindert werden. Dadurch wird gleichzeitig die Bildung von harten Ablagerungen unmöglich.

Solche Konditionierungsmittel für wässrige Systeme werden auf Grund ihrer Wirkungsweise verschieden bezeichnet, z.B. als Dispergiermittel, Härtestabilisatoren, Schutzkolloide und Kristallwachstumsdesaktivatoren (vgl. Held und Bohnsack, "Kühlwasser", 3. Auflage, 1984, Vulkan-Verlag. S. 220 f.); dazu gehören auch Sequestrierungsmittel (Komplexierungsmittel) und weitere grenzflächenakitive Stoffe (Tenside). Wichtig sind insbesondere Härtestabilisatoren, d. h. Verbindungen, die zur Stabilisierung der Härtebildner in Entwässerungssystemen geeignet sind und dabei das Kristallwachstum desaktivieren und meist auch grenzflächenaktive Eigenschaften aufweisen, und Dispergatoren (Dispergiermittel). Dispergiermittel sind grenzflächenaktive Verbindungen, die ungelöste Feststoffteilchen im Wasser - auch im kolloidalen Bereich - dispergieren, d.h. fein verteilt halten. Konditionierungsmittel werden dem Bauwerksentwässerungssystem in wässriger Lösung in Mengen von 0,1 bis 100 g/m$^3$, insbesondere 0,5 bis 50 g/m$^3$ Sicker-oder Grundwasser, zugegeben. Konditionierungsmittel können einzeln oder in Mischung zur Anwendung kommen.

Härtestabilisatoren und Dispergatoren überschneiden sich oft in ihrer Wirkung. Daher sind Konditionierungsmittel bevorzugt auch Kombinationen von Härtestabilisatoren und Dispergatoren, wobei sich in der Regel ein höherer Wirkungsgrad gegenüber dem getrennten Einsatz ergibt. Konditionierungsmittel können auch noch weitere geeignete Zusätze enthalten, wobei aber immer für die Behandlung des abzuführenden Sicker- oder Grundwasser entscheidend sein muss, dass durch den Einsatz eines spezifischen Konditionierungsmittels bzw. Konditionierungsmittelgemisches eine umweltgerechte Verhinderung von Versinterungen erreicht wird.

Beispiele für im erfindungsgemässen Verfahren einsetzbare Konditionierungsmittel finden sich z.B. im Buch von Held und Bohnsack, loc. cit., S. 200 - 239.

Neben den in dieser Literatur beschriebenen Konditionierungsmitteln für Wassersysteme sind zahlreiche weitere Verbindungen und Verbindungsgemische für die Verwendung im erfindungsgemässen Verfahren geeignet.

Zur Stabilisierung der Härtebildner, d.h. als Härtestabilisatoren, im Entwässerungssystem eines Bauwerks kommen unter anderem in Frage: anorganische kondensierte Phosphate, wie Alkali-di-, -tri- und -poly-phosphate, organische Phosphorverbindungen, wie Organophosphonsäuren, z.B. 2-Methyl-propanphosphonsäure oder Hydroxyäthylidendiphosphonsäure, Phosphatester, Polyphosphorsäureester, Aminophosphate, Aminomethylenphosphorsäuren, N-haltige Phosphonate, wie Aminophosphonate, Aminoalkylenphosphonsäuren, wie Aminotri(methylenphosphonsäure) oder Diäthylentriamino-penta(methylenphosphonsäure), Poly-(aminomethylen-phosphonate), oder Hydroxyäthyläthylen(di(aminomethylen)-phosphonsäure), ferner Phosphonocarbonsäuren, z.B. Phosphonobutan-tricarbonsäure (wie sie z.B. in der DE-PS 27 20 551 beschrieben werden), Bernsteinsäureamid, Kohlehydrate, Polysaccharide, Glukonate, Polyglycoside, z.B. Polyglucoside und deren Derivate, Polyoxycarbonsäuren und deren Copolymere, oxydierte Kohlehydrate, wie oxydierte Zellulose, Stärke oder Dextrin, Proteine und andere Eiweissprodukte, wie z.B. Polyasparginsäure, Silikate, wie Alkalisilikate, Wasserglas und Zeolithe. Wasserlösliche Salze entsprechender Säuren sind ebenfalls geeignet.

Als Dispergatoren sind im Entwässerungssystem eines Bauwerks unter anderem geeignet: Tanninderivate, wie sulfitierte Tannine, Ligninsulfonate, sulfonierte Kondensationsprodukte des Naphthalins mit Formaldehyd, anionische Polyelektrolyte, z.B. Polymerisate auf Acrylatbasis, wie Polyacrylate, Polymethacrylate, Polyacrylamide und Copolymere von Acrylsäure bzw. Methacrylsäure und Acrylamid, ferner P-haltige polymere Verbindungen, wie N-Phosphomethyl-makrocyclische Polyäther oder phosphonomethylierte Oxyalkylenamine sowie Phosphinsäure-haltige Homo-und Copolymere von Acrylsäure und Acrylamid (wie sie z.B. in der Europäischen Patentanmeldung 517 470 beschrieben werden) und oligomere Phosphinico-bersteinsäure-Verbindungen (wie sie in der US-PS 4 088 678 und in der Europäischen Patentanmeldung 454 323 beschrieben werden). Weiter sind geeignet Polymere mit N-substituierten Amidfunktionen, z.B. sulfomethylierte oder sulfoäthylierte Polyacrylamide und Polymethacrylamide und Copolymere bzw. Terpolymere mit Acrylsäure und Maleinsäureester, N-Butylacrylamid und dessen Copolymere und Acrylamidopropionsulfonsäure als Salz und deren Copolymere, ferner phosphinoalkylierte Acrylamidpolymere und Copolymere mit Acrylsäure, Copolymere von Alkenen mit ungesättigten Dicarbonsäuren, und Polymere und Copolymere auf der Basis von Maleinsäure. Solche und ähnliche Verbindungen sind z.B. beschrieben in den Europäischen Patentanmeldungen 225 596, 238 852, 238 853, 238 729, 265 846, 310 099, 314 083, 330 876 oder 517 470. Wasserlösliche Salze entsprechender Säuren sind ebenfalls geeignet.

Als Sequestrierungsmittel (Komplexierungsmittel) im Entwässerungssystem eines Bauwerks eignen sich unter anderem Nitrilotriessigsäure, Citronensäure, Aethylendiamintetraessigsäure (EDTA), Aethercarboxylate und oxydierte Kohlehydrate, wie partiell hydrolysierte und oxydierte Stärke oder Dextrin (wie sie z.B. von F. Trulli und E. Santacesaria in Chimicaoggi, Mai 1993, beschrieben werden).

Für das erfindungsgemässe Verfahren geeignete Konditionierungsmittel bzw. Konditionierungsmittelgemische können weitere Zusätze, wie z.B. Aluminatverbindungen (wie sie z.B. in der Europäischen Patentanmeldung 302 522 beschrieben sind), Stabilisatoren, wie polyquaternäre Amine, z.B. Poly(dimethylamino-coepichlorhydrin) oder Poly(diallyldimethyl-ammoniumchlorid) (wie sie in der US-PS 5 038 861 beschrieben sind), oder geeignete Tenside, wie z.B. Alkyl-aryl-sulfonate, Polyvinylsulfonate, Natriummethoxymethylcellulose etc. enthalten.

Als Konditionierungsmittel eignet sich insbesondere ein Gemisch von Natriumsalzen von Polycarbon- und Phosphonocarbonsäuren in wässriger Lösung in Mengen von 0,5 - 50 g pro $m^3$ Sicker- oder Grundwasser, wie es von der Firma Deutsche Nalco-Chemie GmbH, Frankfurt a.M. unter dem Namen Nalco-7311 Plus® im Handel erhältlich ist, oder ein Gemisch aus Aminotri(methylenphosphonsäure), Polyacrylsäure und Na-Salz in Mengen von 1 - 50 g pro $m^3$ Sicker- oder Grundwasser, wie es von der deutschen Firma Chemische Fabrik Budenheim, Budenheim, unter dem Namen Clarafos 161® im Handel erhältlich ist. Ebenfalls geeignet sind weitere Handelsprodukte, so ein Gemisch aus Natriumpolyphosphat mittlerer Kettenlänge mit hoher Lösegeschwindigkeit in Lebensmittelqualität in wässriger Lösung, wie es von der deutschen Firma Benckiser Wassertechnik GmbH, Schriesheim, unter dem Namen Quantophos P4® im Handel erhältlich ist. Gegebenenfalls können diese Handelsprodukte auch in Kombination miteinander verwendet werden. Aber auch alle anderen oben genannten Konditionierungsmittel sind allein oder in beliebigen Kombinationen für die Verwendung im erfindungsgemässen Verfahren geeignet.

Mit genauer Kenntnis der anfallenden Wassermenge und des zugehörigen Wasserchemismus lässt sich die geeignete Menge an Konditionierungsmittel berechnen, die notwendig ist, um die Bildung von Ablagerungen in einem Entwässerungssystem zu verhindern. Gegebenenfalls lässt sich diese Menge auch empirisch bestimmen.

Im folgenden soll die Erfindung anhand von Zeichnungen für ein Beispiel und einen Vergleichsversuch näher erläutert werden.

**Figur 1**

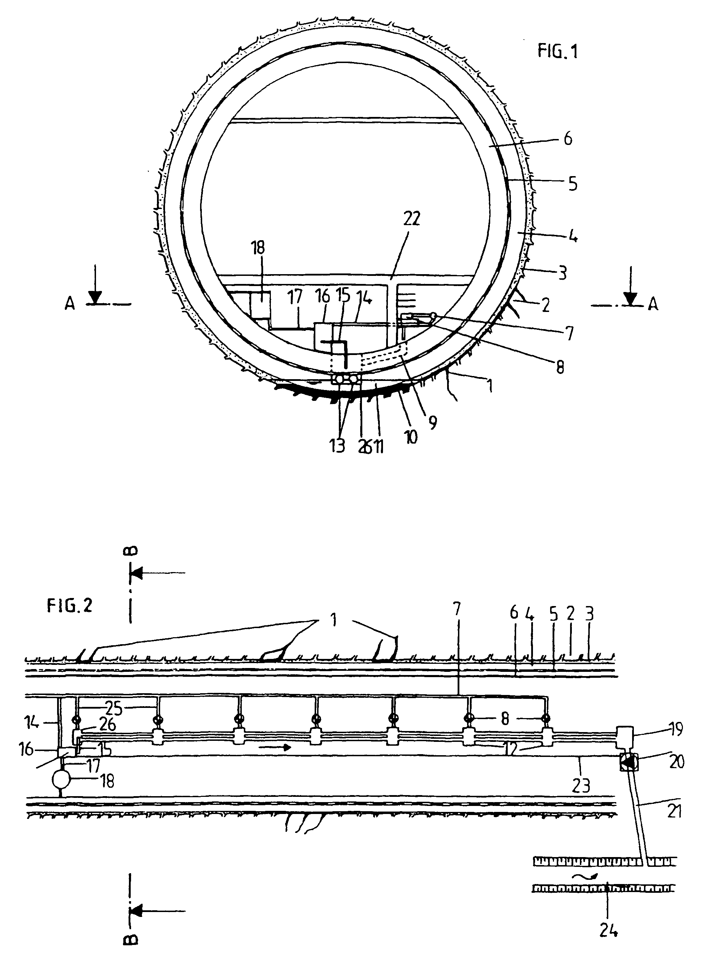

Figur 1 zeigt den schematischen Querschnitt eines Strassentunnels im Fels, der zur Durchführung des Verfahrens geeignet wäre. Die Darstellung entspricht einem Schnitt auf der Höhe der Linie B - B der Fig. 2. Diese Darstellung gehört zum Beispiel 1. Die Darstellung enthält das Grund-und Sickerwasser 1, den anstehenden Fels 2, die Ringspalthinterfüllung 3, den Aussenring 4, die rundumlaufende Abdichtung 5, den Innenring 6, die Hauptleitung (Brauchwasser) 7, die zeitgesteuerten Ventile 8, ein Abflussrohr 9, das Mörtelbett 10, das anstehende Bergwasser 11, die Kontrollschächte 12, die Sickerleitungen 13, eine Leitung (Brauchwasser) 14, die Einspeisleitung 15, die Dosieranlage 16, die Zuleitung (Konditionierungsmittel) 17, den Vorratsbehälter 18, den Kontrollschacht 19, ein Messüberfall oder eine vergleichbare Installation 20, die Sammelleitung 21, die Fahrbahnplatte 22, die Kabelverbindung 23, den Vorfluter 24, die Brauchwasseranschlüsse 25, und den ersten Schacht 26 der Entwässerungsleitung.

**Figur 2**

Figur 2 zeigt die schematisch vereinfachte Darstellung der Tunnelentwässerung anhand eines Schnittes auf Höhe der Linie A - A der Fig. 1. Diese Darstellung gehört zum Beispiel 1.

**Figur 3**

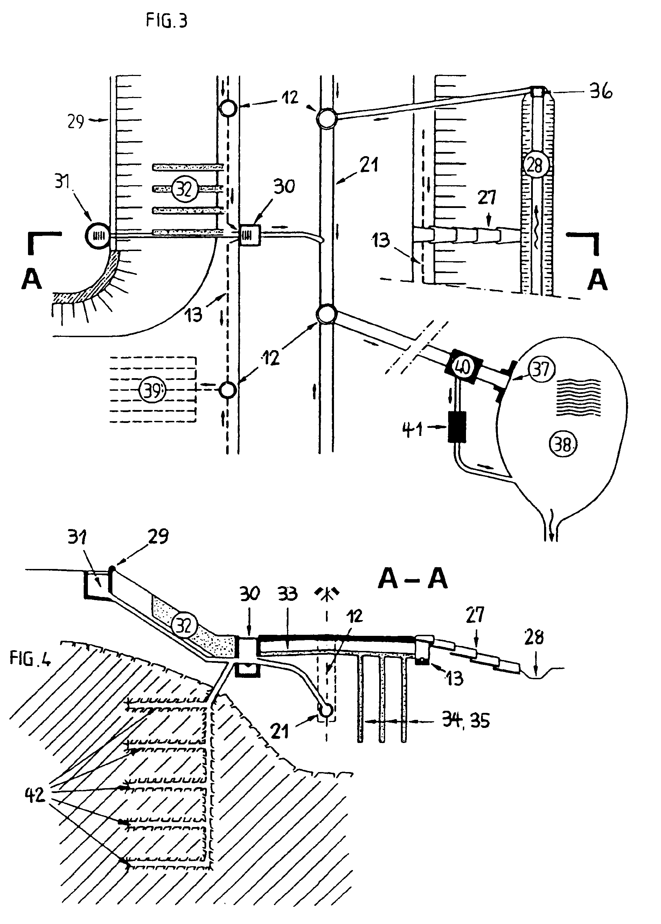

Figur 3 zeigt die schematische Darstellung der zur Zeit gebräuchlichsten Elemente von Entwässerungssystemen . Diese Darstellung gehört zum Beispiel 1.

**Figur 4**

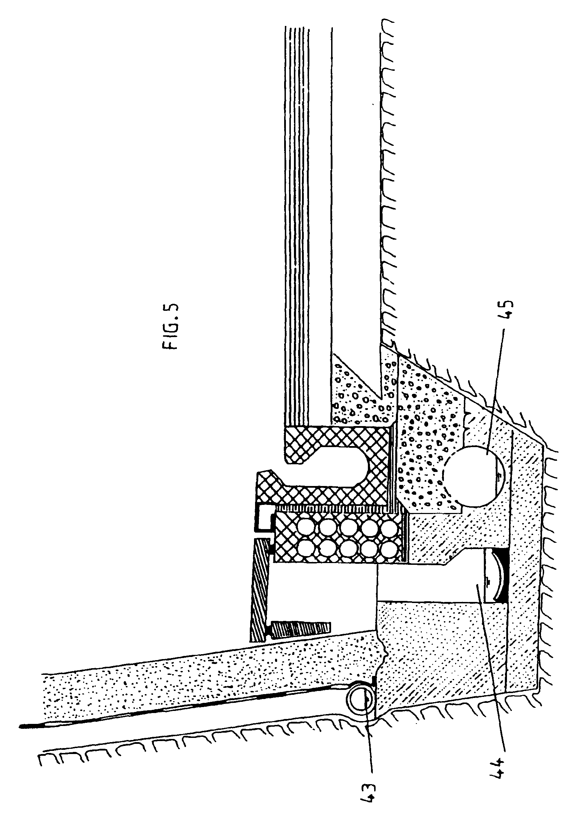

Figur 4 zeigt die schematische Darstellung der zur Zeit gebräuchlichsten Elemente von Entwässerungssystemen anhand eines Schnittes auf Höhe der Linie A - A der Fig. 3. Diese Darstellung gehört zum Beispiel 1.
Fig. 3 enthält zusammen mit der Fig. 4 alle wesentlichen Elemente, die ein Entwässerungssystem beinhalten kann. Die Elemente der Oberflächenentwässerung sind Rinnen 27, Gräben 28, Abschlüsse 29, Schlammsammler 30, sowie Einlaufschächte 31. Die Elemente der Drainagen sind Sickergräben 32, Sickerleitungen 13 mit durchlässiger Wandung, wie z.B. unverfugte, gelochte oder geschlitzte Rohre, Rigolen, Sickerschichten 33, Sanddrains 34, wie z. B. Sickeranlagen aus Sandlagen, Geodrains 35, wie z.B. Sickeranlagen aus Kunststoff oder Geotextilien, sowie Drainagebohrungen im Fels 42. Die Elemente der Kanalisation sind Sammelleitungen 21, die das gesamte, ihnen durch Sekundärleitungen zugeführte Grund- und Sickerwasser eines Abschnitts des Entwässerungssystems aufnehmen und ableiten, zudem Kontrollschächte 12 und Einlaufbauwerke 36. Die Elemente der Rückgabebauwerke sind Auslaufbauwerke 37, Rückhaltebecken 38, Versickerungsanlagen 39, Regenüberlauf 40 und Oelabscheider 41.
Folgende Elemente eignen sich besonders gut für das erfindungsgemässe Verfahren zur Verhinderung von Ablagerungen in einem Bauwerksentwässerungssystem: Wasserführung in einer Rinne 27, oder in einem Graben 28, oder in einem Abschluss 29, oder in einem Sickergraben 32, oder in einer Sickerleitung 13, oder in einer Sammelleitung 21, da hier die Zugabe des Konditionierungsmittels ohne grosse Probleme mit einer Dosieranlage am höchsten Punkt des betreffenden Elements erfolgen kann.

**Figur 5**

Figur 5 zeigt einen Schnitt durch den N 13 Isla-Bella Strassentunnel in der Schweiz im Bereich der Gehwegkonsole. Die Darstellung zeigt den Aufbau der verschiedenen Entwässerungsleitungen in diesem Strassentunnel. Diese Darstellung gehört zum Vergleichsversuch. Die Darstellung enthält die Isolationssickerleitung 43, die Transportleitung 44 und die Drainageleitung 45.

**Beispiel 1**

Im ersten Beispiel nach Fig. 1 und Fig. 2 erfolgt die Zugabe des Konditionierungsmittels mittels einer Dosieranlage 16 über eine Einspeisleitung 15 aus Kunststoff in den ersten Schacht 26 der Sickerleitungen 13. Die Menge des Mittels wird mit einer Dosieranlage 16 über die Einspeisleitung 15 in das Entwässerungssystem, idealerweise an der höchsten Stelle der Sickerleitungen 13 zugegeben. Die Menge des Mittels richtet sich nach der Menge und dem Chemismus des anfallenden Bergwassers.
Zur Bestimmung des Chemismus des anfallenden Bergwassers sollten an verschiedenen Standorten über die Tunnelachse verteilt Wasserproben direkt vor Ort, beispielsweise aus Bohrlöchern, entnommen werden. Es ist dabei darauf zu achten, dass dem Bergwasser keine Gelegenheit zur $CO_2$-Entgasung geboten wird, da sonst die Resultate der chemischen Analyse nicht mehr mit den effektiv herrschenden Verhältnissen übereinstimmen. Die chemische Analyse sollte mindestens die folgenden Angaben liefern: Gesamthärte °dH, Carbonathärte °dH, m-Wert, Ca-Härte °dH, elektrische Leitfähigkeit µs/cm, pH-Wert, Sulfat mg/l, Chlorid mg/l, Natrium mg/l. Aus diesen Angaben lässt sich ein Stabilitätsindex nach Ryznar berechnen, der die Grundlage für die minimal notwendige Dosierung des Mittels bildet. Für hartes Bergwasser mit einer Gesamthärte von 40 °dH und einer Carbonathärte von 20 °dH empfiehlt sich auf diese Weise eine Dosierung von ca. 5 g Konditionierungsmittel pro m$^3$ der angegebenen Marke Nalco 7311 Plus®. Für andere Konditionierungsmittel ist die Menge fallweise zu berechnen.

Zur Verteilung des Konditionierungsmittels empfiehlt sich eine Verdünnung mit Brauchwasser. Eine Verdünnung ist zudem erforderlich, wenn zu Beginn der Sickerleitungen ein Streckenabschnitt ohne steten Zufluss von Bergwasser ansteht und dadurch die Sickerleitungen zumindest teilweise trocken liegen. In diesem Fall ist die Dosieranlage 16 mit einem Brauchwasseranschluss 14 auszustatten, damit das Konditionierungsmittel in jedem beliebigen Verhältnis mit Brauchwasser verdünnt und danach in das Entwässerungssystem eingespeist werden kann. Für den Fall, dass die Sickerleitungen im Bereich der Dosieranlage trocken liegen, sollte das Mittel so stark mit Brauchwasser verdünnt werden, dass eine Einspeisleistung von 1 1/h im ersten Schacht 26 nicht unterschritten wird, da ansonsten die Verdunstung eine einwandfreie Mischung mit dem Bergwasser verhindert. In vielen Entwässerungssystemen variiert die gesamthaft anfallende Bergwassermenge stark (z.B. in Abhängigkeit von den regionalen Niederschlägen). Hier lohnt es sich, wenn die Dosieranlage 16 in Abhängigkeit von der anfallenden Wassermenge am Ende des Entwässerungssystems gesteuert ist. Diese Steuerung ist insbesondere wichtig, wenn der Wasseranfall über die Zeit stark schwankend ist.

Am Ende der Tunnelentwässerung befindet sich in der Mehrzahl solcher Entwässerungssysteme ein vergrösserter Kontrollschacht 19. Hier wird die anfallende Menge Bergwasser in den Entwässserungskanal 21 umgeleitet und - wie in Fig. 2 dargestellt - einem Vorfluter 24 zugeleitet.

Im Entwässerungskanal 21 kann an geeigneter Stelle ein Messüberfall 20 oder eine vergleichbare Installation angebracht werden, die es ermöglicht, die durchfliessende Wassermenge in periodischen Abständen zu ermitteln und über eine Kabelverbindung 23 an die Dosieranlage 16 weiterzuleiten. Damit wird erreicht, dass die Dosieranlage 16 zu jedem Zeitpunkt genau jene Menge Konditionierungsmittel in das Entwässerungssystem einspeist, die nötig ist, damit am Ende der Entwässerungsleitung die im Wasser enthaltene Produktkonzentration den vorgegebenen Sollwert erreicht.

Bei sehr hartem Wasser und entsprechend hoher Zugabe von Konditionierungsmittel kann es vorkommen, dass ein Teil der im Wasser gelösten Salze als amorphe Niederschläge ausfallen. Diese Niederschläge können bei Leitungsunebenheiten oder Querschnittveränderungen eine Störung des Abflussregimes verursachen, indem sie sich am Boden der Sickerleitung 13 ablagern und im Laufe der Zeit ebenfalls harte Krusten bilden. Um diese Art der Inkrustierug zu verhindern, werden alle Abschnitte der Sickerleitungen in periodischen Abständen von etwa 3 - 5 Tagen mit Brauchwasser gespülL Damit diese Spülung mit möglichst wenig Brauchwasser durchgeführt werden kann und damit zudem der Reinigungseffekt im Entwässerungssystem optimiert wird, kann an mehreren Schächten, die den freien Zugang zur durchgehenden Entwässerungsleitung ermöglichen, ein Brauchwasseranschluss 25 ab der Hauptleitung 7 fest installiert werden. Jeder dieser Anschlüsse wird mit einem zeitgesteuerten Ventil 8 versehen. Die zeitgesteuerten Ventile können nach Bedarf eingestellt werden; so kann man in den niederschlagsarmen Perioden die Spülung der Entwässerungsleitung nur mit einem Teil der zeitgesteuerten Ventile 8 durchühren und die nicht benützten Ventile abschalten. Die Spülung dient dazu, sowohl die amorphen Niederschläge, die aus dem Bergwasser ausfallen, als auch ungelöste Stoffe, die als Feinstanteile im Bergwasser enthalten sind, wegzuschwemmen.

**Vergleichsversuch**

Im Nationalstrassentunnel Isla-Bella der N 13 wurde ein Versuch zur Verhinderung von Ablagerungen in einer der Entwässerungsleitungen (rechte Transportleitung bei Blickrichtung Chur) durchgeführt Seit dem Bau dieses Tunnels bilden sich in dieser Entwässerungsleitung pro Jahr bis zu 2 cm dicke, harte Ablagerungsschichten, die mit äusserst aufwendigen Unterhaltsmethoden periodisch entfernt werden müssen. Um diese und andere Unterhaltsarbeiten durchführen zu können, wird der Strassentunnel während 2 Wochen pro Jahr nachts für den Verkehr gesperrt. In der Fig. 5 ist ein Schnitt durch den Isla-Bella Strassentunnel im Bereich der Gehwegkonsole mit den verschiedenen Entwässerungsleitungen dargestellt. Die Isolationssickerleitung 43 sammelt das hinter der Isolation anfallende Bergwasser und leitet es in periodischen Abständen über einen Schacht der Transportleitung 44 zu. Die Drainageleitung 45 unter dem Fahrbahnrandabschluss war für den Versuch ohne Bedeutung. Der dargestellte Aufbau des Strassenquerschnitts hat sowohl für die rechte wie auch die linke Tunnelseite Gültigkeit. Zur Bestimmung der Versuchsparameter wurden aus dem Strassentunnel an verschiedenen Stellen Wasser- und Ablagerungsproben entnommen. Die chemischen Analysen der Wasserproben ergaben folgende Resultate:

Entnahmeort der Wasserproben:

Nr. 1: Ende der Transportleitung, vor dem Nordportal (max. Bergwassermenge). Nr. 2: Mitte der Transportleitung, in Tunnelmitte (mittlere Bergwassermenge). Nr. 3: Beginn der Transportleitung (Südportal), nahe der Dosieranlage (min. Berg wassermenge)

|  | Nr. 1 | Nr. 2 | Nr. 3 |
|---|---|---|---|
| pH | 7,6 | 7,6 | 7,7 |
| Elektr. Leitfähigkeit (µs/cm) | 704 | 692 | 680 |
| m-Wert (Ks 4,3/mmol/l) | 5,7 | 6,0 | 6,8 |
| Ca-Härte (°dH) | 10,9 | 12,3 | 13,1 |
| Eisen (mg/l) | 0,05 | 0,04 | 0,03 |
| Sulfat (mg/l) | 90 | 55 | 108 |
| Stabilitätsindex nach Ryznar | 6,8 | 6,6 | 6,5 |
| Sättigungsindex nach Langelier | 0,4 | 0,5 | 0,5 |

Die chemischen Analysen von vier Ablagerungsproben (Probennummer 1-4), die in zunehmender Distanz vom Südportal der Transportleitung entnommen wurden, ergaben folgende Werte (in %):

| Probennummer | 1 | 2 | 3 | 4 |
|---|---|---|---|---|
| Glühverlust (bei 900 °C) | 43,8 | 43,2 | 43,3 | 43,5 |
| Kieselsäure ($SiO_2$) | 0,4 | 0,7 | 0,2 | 0,7 |
| Eisenoxid ($Fe_2O_3$) | 0,24 | 0,65 | 0,49 | 0,47 |
| Calciumoxid (CaO) | 50,7 | 51,2 | 51,2 | 53,5 |
| Magnesiumoxid (MgO) | 0,6 | 0,8 | 0,7 | 0,9 |

Diese Analysen liessen folgende Aussagen zu: Die Ca-Härte des Sickerwassers ist am Ende des Tunnels deutlich niedriger als in der Tunnelmitte (die Differenz von 1 °dH entspricht einer Abscheidung von ca. 18 g $CaCO_3$ pro $m^3$ Bergwasser. Alle Ablagerungsproben zeigen deutlich die fast ausschliessliche Bildung von $CaCO_3$ an. Daneben fanden sich geringe Mengen an Magnesium- und Eisensalzen sowie etwas Silikat. Schwerlösliche Phosphat- und Sulfatverbindungen fanden sich nicht. Der jeweilige Ryznar-Index lag oberhalb von 6,0. Danach neigt das vorliegende Wasser nur schwach zu Ablagerungen. Der Langelier-Index zeigte dagegen Werte > 0 an. Hier wurde die Bildung von Calciumablagerungen deutlich. Auf Grund dieser Resultate wurde die Versuchsanordnug bestimmt.
Ab Südportal steigt die Fahrbahn im Tunnel (und damit verbunden auch die beiden Transportleitungen) auf den ersten ca. 300 Metern an. Danach folgt ein Längsgefällewechsel, der den Bergwasserabfluss bis zum Nordportal bestimmt. Unterhalb des rechten und linken Gehwegs befindet sich je eine Transportleitung 44, die das über die Isolationssickerleitung 43 anfallende Bergwasser aufnimmt und in Richtung Nordportal ableitet. Nach dem Längsgefällewechsel wurde in der ersten Nische auf der rechten Seite (Blickrichtung Chur) eine Dosieranlage installiert. Die Dosieranlage bestand aus einem GFK-Wandgehäuse mit einer Dosierpumpe, einer Sauglanze, einem Dosierventil, einer Zeitsteuerung, einer Dosierüberwachung sowie einer Alarmierung bei fehlender Dosierung. Die Einspeisung des Konditionierungsmittels erfolgte von der Dosieranlage über einen Polyäthylen-Schlauch in den nächstgelegenen Einlaufschacht. Damit sollte das über die Isolationssickerleitung 43 in die Transportsickerleitung 44 zufliessende Bergwasser bis zum Austritt aus dem Tunnel beim Nordportal stabilisiert werden. Die am Ende der Transportleitung (Nordportal) anfallende Bergwassermenge auf der rechten Tunnelseite betrug rund 10 l/sec. Mit dieser Menge und den bereits erwähnten Faktoren wurde die gewählte Dosiermenge bestimmt. Dabei kommt die folgende Formel zur Anwendung, in der M = Menge Nalco 7311 Plus® in ppm) und $S_R$= Stabilitätsindex nach Ryznar ist; sie gilt für $3<S_R<7$ und für Grund- und Sickerwässer:

$$M = \frac{e^{(7,5-S_R)}}{2} + 4$$

Während 40 Tagen wurde die konstante Menge von 6,3 g Konditionierungsmittel pro $m^3$ in Tropfen in die rechte Transportleitung eingespeist. Parallel dazu blieb die linke Transportleitung unbehandelt. Als Konditionierungsmittel wurde ein Gemisch aus Na-Salzen von Polycarbonsäuren und Phosphonocarbonsäuren (Nalco 7311 Plus®) verwendet. Zeitgleich mit dem Versuchsbeginn (Dosierbeginn) wurden zur Kontrolle der Wirkung in periodischen Abständen von ca. 250 Metern insgesamt 14 Zementsteine (Abmessungen 10x10x25 cm) in die Schächte beider Transportleitungen ausgelegt. Nach 40 Tagen wurden die Zementsteine aus den Schächten entfernt und qualitativ auf neugebildete Ablagerungen untersucht. Parallel dazu wurden an den gleichen Stellen Wasserproben entnommen und chemisch analysiert. Die nachfolgende Tabelle gibt einen Ueberblick über die wichtigsten Resultate.

| Nummer des Zementsteins; Entfernung bis Sammelschacht beim Nordportal | Chemische Analyse der Wasserproben aus der linken Transportleitung (ohne Dosierung) | Chemische Analyse der Wasserproben aus der rechten Transportleitung (mit Dosierung) | Qualitative Beurteilung der Ablagerungen auf den Zementsteinen aus der linken Transportleitung (ohne Dosierung) | Qualitative Beurteilung der Ablagerungen auf den Zementsteinen aus der rechten Transportleitung (mit Dosierung) |
|---|---|---|---|---|
| Nr. 1 ca. 1500 m | ohne Nalco 7311 Plus; Ca-Härte 13,1 °dH | Nalco 7311 Plus 15 mg/l: Ca-Härte 13,1 °dH | keine sichtbaren Ablagerungen | keine sichtbaren Ablagerungen |
| Nr. 2 ca. 1250 m | | | rote Verfärbungen | rote Verfärbungen |
| Nr. 3 ca. 1000 m | | | rote Verfärbungen | rote Verfärbungen |
| Nr. 4 ca. 750 m | ohne Nalco 7311 Plus; Ca-Härte 11,8 °dH | Nalco 7311 Plus 15 mg/l; Ca-Härte 12,7 °dH | hellrote, weiche Ablagerungen | keine Ablagerungen |
| Nr. 5 ca. 500 m | ohne Nalco 7311 Plus; Ca-Härte 11,9 °dH | Nalco 7311 Plus 11 mg/l; Ca-Härte 13,1 °dH | hellrote, weiche Ablagerungen | keine Ablagerungen |
| Nr. 6 ca. 250 m | | | hellrote, harte Ablagerungen, 1,5-2 mm stark 1,5-2 mm stark | keine Ablagerungen |
| Nr. 7 ca. 50 m | ohne Nalco 7311 Plus; Ca-Härte 11,0 °dH | Nalco 7311 Plus 8 mg/l; Ca-Härte 13,2 °dH | hellrote, harte Ablagerungen, 1,5-2 mm stark | lediglich rote Verfärbungen; keine Ablagerungen |

Die Wirkung wird deutlich sichtbar, wenn man die an den verschiedenen Bergwasserproben gemessenen Ca-Härten betrachtet. In der linken Transportleitung (ohne Zugabe von Konditionierungsmittel) sinkt die Ca-Härte des Bergwassers von den ursprünglich im Bergwasser gelösten rund 13 °dH auf 11,8 °dH bei der Tunnelmitte ab. Danach steigt die Härte geringfügig auf 11,9 °dH (500 Meter vor dem Ende der Transportleitung) und fällt danach nochmals deutlich auf 11,0 °dH (50 Meter vor dem Ende der Transportleitung) im Bereich des Nordportals. Gerade in diesem Bereich wird der Abfall der Ca-Härte durch die 1,5 - 2 mm starken, harten Kalkablagerungen auf den Zementsteinen, die während 40 Tagen in der linken Transportleitung lagerten, bestätigt.

In der rechten Entwässerungsleitung (mit Zugabe von Konditionierungsmittel) lagen die im Bergwasser gemessenen Ca-Härten mit 12,7 °dH, 13,1 °dH und 13,2 °dH deutlich höher. Am Ende der Versuchsstrecke beim Zementstein Nr. 7 betrug die Differenz der Ca-Härten des Bergwassers in der rechten und linken Transportleitung 2 °dH. Dies bedeutet, dass es mit der in diesem Beispiel beschriebenen Zugabe von Konditionierungsmittel gelungen ist, die Bildung von harten Ablagerungen in der rechten Transportleitung in der Grössenordnung von 36 g $CaCO_3$ pro $m^3$ anfallendem Bergwasser zu verhindern. Mit der Zugabe von 6,3 g Nalco 7311 Plus® pro $m^3$ in die rechte Transportleitung wurde beim Zementstein Nr. 7 eine Produktkonzentration von 8 mg/l Bergwasser erreicht.


**Patentansprüche**

1.  Verfahren zur Verhinderung von Ablagerungen in Entwässerungssystemen von Tunnelbauten, Staumauem. Talsperren oder Wasserkraftbauten, **dadurch gekennzeichnet, daß** man dem Entwässerungssystem ein oder mehrere Konditionierungsmittel aus der Gruppe N-haltige Phosphonate, insbesondere Aminoalkylenphosphorsäuren, Phosphonocarbonsäuren, Bernsteinsäureamid, Polysaccharide, Polyoxycarbonsäuren und deren Copolymere, Proteine, insbesondere Polyasparaginsäure, Polyacrylate, Polymethacrylate, Polyacrylamide, Copolymere von Acrylsäure bzw. Methacrylsäure und Acrylamid, sulfomethylierte oder sulfoethylierte Polyacrylamide und Copolymere bzw Terpolymere mit Acrylsäure und Maleinsäureester, Maleinsäureanhydrid-Polymere und -Copolymere und Ethercarboxylate mittels einer Dosieranlage (16) über eine Einspeisleitung (15) an der höchsten Stelle der Sickerleitung (13) in wäßriger Lösung in einer Menge von 0,1 bis 100 g/m$^3$ Sicker-oder Grundwasser in Abhängigkeit von der anfallenden Wassermenge am Ende des Entwässerungssystems zugibt.

2. Verfahren nach Anspruch 1, **dadurch gekennzeichnet, daß** man das (die) Konditionierungsmittel in einer Menge von 0,5 bis 50 g/m$^3$ Sicker- oder Grundwasser zugibt.

3. Verfahren nach mindestens einem der Ansprüche 1 bis 2, **dadurch gekennzeichnet, daß** man eine Dosieranlage (16) mit einem Brauchwasseranschluß (14) verwendet, mit dem das Konditionierungsmittel in jedem beliebigen Verhältnis mit Brauchwasser verdünnt und danach in das Entwässerungssystem eingespeist werden kann.

4. Verfahren nach mindestens einem der Ansprüche 1 bis 3, **dadurch gekennzeichnet, daß** man dem Sicker- oder Grundwasser weitere Zusätze zugibt.

5. Verfahren nach mindestens einem der Ansprüche 1 bis 4, **dadurch gekennzeichnet, daß** man dem Sicker- oder Grundwasser ein Gemisch von Phosphonocarbonsäuren und Polycarbonsäuren in Form ihrer wasserlöslichen Salze in wäßriger Lösung In Mengen von 0,50 bis 50 g/m$^3$ Sicker- oder Grundwasser zugibt.

## Claims

1. A process for preventing the formation of deposits in drainage systems of tunnel structures, barrages, retention basins or hydroelectric power plants, **characterized in that** one or more conditioning agents selected from the group consisting of N-containing phosphonates, in particular aminoalkylenephosphoric acids, phosphonocarboxylic acids, succinic acid amide, polysaccharides, polyoxycarboxylic acids and their copolymers, proteins, in particular polyaspartic acid, polyacrylates, polymethacrylates, polyacrylamides, copolymers of acrylic acid or methacrylic acid and acrylamide, sulfomethylated or sulfoethylated polyacrylamides and copolymers or terpolymers with acrylic acid and maleic acid esters, maleic acid anhydride polymers and copolymers and ethercarboxylates, are added from a dosage unit (16) via a feed line (15) into the drainage system at the highest point of the seepage pipe (13) in the form of an aqueous solution in an amount of from 0.1 to 100 g/m$^3$ of infiltration or ground water in dependence on the amount of water present at the end of the drainage system.

2. The process according to claim 1, **characterized in that** the conditioning agent(s) is (are) added in an amount of from 0.5 to 50 g/m$^3$ of infiltration or ground water.

3. The process according to at least one of claims 1 to 2, **characterized in that** a dosage unit (16) having a service water inlet (14) to enable the conditioning agent to be diluted in any ratio with service water for subsequent feeding into the drainage system is used.

4. The process according to at least one of claims 1 to 3, **characterized in that** further additives are added to the infiltration or ground water.

5. The process according to at least one of claims 1 to 4, **characterized in that** a mixture of phosphonocarboxylic acids and polycarboxylic acids in the form of their water-soluble salts is added to the infiltration or ground water in the form of an aqueous solution in amounts of from 0.50 to 50 g/m$^3$ of infiltration or ground water.

## Revendications

1. Procédé pour empêcher des dépôts clans des systèmes de drainage de constructions de tunnel, de barrages, de barrage-réservoirs ou de centrales hydro-électriques, **caractérisé par le fait qu'**on ajoute au système de drainage un ou plusieurs agents de conditionnement choisis du groupe comprenant les phosphonates contenant de l'azote, en particulier les acides phosphoriques d'aminoalkylène, les acides phosphonocarboxyliques, l'amide d'acide succinique, les polysaccharides, les acides polyoxycarboxyliques et leurs copolymères, les protéines, en particulier l'acide polyasparaginique, les polyacrylates, les polyméthacrylates, les polyacrylamides, les copolymères d'acide acrylique respectivement d'acide méthacrylique et d'acrylamide, les polyacrylamides sulfométhyliques ou sulfoéthyliques et les copolymères respectivement les terpolymères avec l'acide acrylique et les esters d'acide maleique, les polymères et copolymères d'anhydride d'acide maléique et les carboxylates d'éther, par l'intermédiaire d'une installation de dosage (16) par un conduit d'alimentation (15) au point le plus haut du conduit de drainage (13) en forme d'une solution aqueuse dans une quantité de 0,1 à 100 g par m$^3$ d'eau d'infiltration ou d'eau souterraine on fonction de la quantité d'eau présente à la fin du système de drainage.

2. Procédé selon la revendication 2, **caractérisé par le fait que** l'agent de conditionnement est (les agents de conditionnement sont) ajouté(s) dans une quantité de 0,5 à 50 g par m$^3$ d'eau d'infiltration ou d'eau souterraine.

3. Procédé selon au moins l'une des revendications 1 et 2, **caractérisé par le fait qu'**on utilise une installation de dosage (16) avec une alimentation (14) en eau industrielle avec laquelle eau l'agent de conditionnement peut être dilué dans l'eau industrielle selon un rapport quelconque et puis alimenté dans le système de drainage.

4. Procédé selon au moins l'une des revendications 1 à 3, **caractérisé par le fait qu'**on ajoute d'autres additifs à l'eau d'infiltration ou l'eau souterraine.

5. Procédé selon au moins l'une des revendications 1 à 4, **caractérisé par le fait qu'**on ajoute à l'eau d'infiltration ou à l'eau souterraine un mélange d'acides phosphonocarboxyliques et d'acides polycarboxyliques sous forme de leurs sels solubles à l'eau en forme d'une solution aqueuse dans une quantité de 0,50 à 50 g par m$^3$ d'eau d'infiltration ou d'eau souterraine.

FIG.1

FIG.2

FIG.3

FIG.4

A – A

FIG.5

43

44

45

EP 0 638 049 B2